# EUROPÄISCHE PATENTSCHRIFT

(11) **EP 1 208 639 B1**
(45) Veröffentlichungstag und Bekanntmachung des Hinweises auf die Patenterteilung: **02.09.2009**
(21) Anmeldenummer: 01960256.4
(22) Anmeldetag: 01.06.2001
(51) Int. Cl.: H02P 7/285, G01P 3/48

(54) **VERFAHREN ZUM BEREITSTELLEN EINES DIGITALEN STROMRIPPELSIGNALS**
METHOD FOR PROVIDING A DIGITAL CURRENT FLUCTUATION SIGNAL
PROCEDE POUR LA MISE A DISPOSITION D'UN SIGNAL D'ONDULATION DE COURANT NUMERIQUE

(30) Priorität: 06.06.2000 DE 10028033
(43) Veröffentlichungstag der Anmeldung: 29.05.2002
(73) Patentinhaber: Leopold Kostal GmbH & Co. KG, 58507 Lüdenscheid (DE)
(72) Erfinder: OTTE, Stefan, 58452 Witten (DE)
(86) Internationale Anmeldenummer: PCT/EP2001/006219
(87) Internationale Veröffentlichungsnummer: WO 2001/095473

(56) Entgegenhaltungen:
- EP-A- 0 689 054
- DE-A- 4 135 873
- DE-A- 4 217 265
- DE-A- 19 834 108
- DE-A1- 19 602 362
- US-A- 5 181 232
- US-A- 5 524 168

## Beschreibung

Die Erfindung betrifft ein Verfahren zum Bereitstellen eines digitalen Stromrippelsignals aus dem analogen Ankerstromsignal eines bestromten Gleichstrommotors.

Das Ankerstromsignal eines Gleichstrommotors umfaßt einen sogenannten Gleichanteil sowie einen den Gleichanteil überlagernden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen Stromspitzen - im folgenden Stromrippel genannt - treten bei einer Umdrehung des Ankers in einer der Anzahl der Kollektorlamellen entsprechenden Häufigkeit auf. Weist beispielsweise der Anker 10 Kollektorlamellen au, sind im Ankerstromsignal entsprechend 10 Stromrippel zu erkennen. Eine Zählung der Stromrippel kann somit Aufschluß über die aktuelle Drehstellung des Ankers des Gleichstrommotors und somit bezüglich des angetriebenen Elements innerhalb seiner vorbestimmten Bewegungsstrecke geben. Zu diesem Zweck wird das analoge Ankerstromsignal digitalisiert, um eine entsprechende Zählung vornehmen zu können. Über eine Auswertung der Frequenz der ermittelten Stromrippel kann auch eine Aussage über die Drehgeschwindigkeit des Ankers des Gleichstrommotors gemacht werden.

Ein Verfahren zum Bereitstellen eines digitalisierten Stromrippelsignals ist beispielsweise in der DE 198 34 108 A1 beschrieben. Bei dem in diesem Dokument beschriebenen Verfahren erfolgt eine Abtastung des Ankerstromsignals über den gesamten Zeitraum seiner Bestromung in einer Tastfrequenz, die erheblich größer ist als die maximal zu erwartende Stromrippelfrequenz. Damit das Ankerstromsignal überlagernde Störimpulse nicht mit in die Auswertung einer Stromrippelzählung gelangen, wird das analoge Ankerstromsignal vor seiner Digitalisierung entsprechend aufbereitet, beispielsweise einer Frequenzfilterung unterzogen. Zum Auffinden eines Stromrippels wird das Ankerstromsignal differenziert und anschließend einer Differenzbildung der minimalen und maximalen Werte in einem vorbestimmten zeitlichen Intervall unterzogen. Aus diesen Differenzwerten wird dann der Stromrippel etwa durch Suchen des Maximums der Differenzwerte oder durch Bestimmen des Schwerpunktes der Differenzwerte ermittelt.

Durch die hohe Abtastrate, die beim Gegenstand dieses Dokumentes vorgesehen ist, um das analoge Ankerstromsignal zur Bereitstellung des digitalisierten Stromrippelsignals abzutasten, und durch die nachfolgende Auswertung des digitalisierten Signals zum Auffinden des eigentlichen Stromrippels ist zwar eine genaue Stromrippeldetektion über das gesamte Ankerstromsignal hinweg möglich. Nachteilig ist jedoch, dass zum Durchführen dieses Verfahrens eine nicht unbeträchtliche Rechnerkapazität zur Verfügung stehen muß.

Es sind weitere Verfahren zum Bereitstellen eines digitalen Stromrippelsignals aus dem analogen Ankerstromsignal eines bestromten Gleichstrommotors bekannt, bei denen die A/D-Wandlung Schwellwert basiert aus dem Ankerstromsignal erfolgt. Diese A/D-Wandlung kann beispielsweise in einem ASIC erfolgen, so dass lediglich eine solche Rechnerkapazität und -leistung zur Verfügung stehen muß, die zur Auswertung benötigt wird. Problematisch ist beim Durchführen dieses Vefahrens jedoch eine hinreichend genaue Stromrippelbestimmung, in der Anlauf bzw. Auslaufphase des Motors, so dass in diesen Phasen die Fehlerträchtigkeit sehr viel höher ist, als im eingeschwungenen Betriebszustand.

Weitere Verfahren zum Bereitstellen eines digitalisierten Stromrippelsignals gemäß dem Oberbegriff des Patentanspruchs 1 sind beispielsweise in der deutschen Offenlegungsschrift DE 196 02 362 A1 sowie in der US-Patentschrift 5,524,168 beschrieben.

Ausgehend von dem eingangs genannten, gattungsgemäßen Verfahren liegt der Erfindung daher die Aufgabe zugrunde, dieses dergestalt weiterzubilden, dass mit möglichst wenig Rechnerleistung über das gesamte Ankerstromsignal hinweg und somit insbesondere auch in der Anlauf- und Auslaufphase des Gleichstrommotors eine hinreichend genaue Stromrippeldetektion möglich ist.

Diese Aufgabe wird erfindungsgemäß dadurch gelöst,
- dass das analoge Ankerstromsignal nach einer Filterung einer Schwellwert basierten A/D-Wandlung unterzogen wird,
- dass das analoge Ankerstromsignal bei Einschalten des Gleichstrommotors während der Anlaufphase und bei seiner Abschaltung während der Auslaufphase im wesentlichen begrenzt auf diese Phasen in einer vorbestimmten Taktrate, die höher ist als die zu erwartende maximale Frequenz der Stromrippel, überabgetastet wird und
- dass anschließend für eine Plausibilitätsprüfung ein Vergleich zwischen dem oder den aus der Schwellwert basierten A/D-Wandlung ermittelten Stromrippeln und dem oder den aus der Überabtastung ermittelten Stromrippeln erfolgt, wobei bei nicht hinreichender Übereinstimmung der jeweils detektierten Stromrippel die aus der Überabtastung ermittelten Stromrippel in die weitere Auswertung eingehen.

Bei dem erfindungsgemäßen Verfahren ist vorgesehen, dass das gesamte Ankerstromsignal einer Schwellschwert basierten A/D-Wandlung, beispielsweise durchgeführt in einem ASIC, unterzogen wird. Die sich bei dieser Umwandlung des Ankerstromsignales herausbildenden digitalen Stromrippel werden mit einer ausreichend hohen Zuverlässigkeit ermittelt. In der Anlauf- und Auslaufphase des Motors, d.h. bei seinem Einschalten bzw. bei seinem Ausschalten erfolgt eine zusätzliche Überabtastung in einer Taktrate, die höher ist als die zu erwartende maximale Frequenz der Stromrippel. Diese Taktrate kann beispielsweise dem 5-fachen der Frequenz der Stromrippel betragen. Durch geeignete Erkennungsalgorithmen erfolgt ein Auffinden des oder der Stromrippel. Die Abtastung ist auf die Anlauf- bzw. Auslaufphase des Gleichstrommotors beschränkt. In diesen Phasen des Betriebszustandes des Gleichstrommotors steht auch bei Einsatz eines bezüglich seiner Leistung lediglich an die Bedürfnisse der Auswertung der Stromrippel angepaßten Rechner eine ausreichende Leistung bereit, um diese Überabtastung durchführen zu können. Mit diesem höher aufgelösten digitalen Ankerstromsignal erfolgt eine Plausibilitätsüberprüfung der im Zuge der Schwellwert basierten A/D-Wandlung ermittelten Stromrippel in der Anlauf- bzw. Auslaufphase. Diese Plausibilitätsüberprüfung wird in einem Vergleich zwischen dem oder der aus der Schwellwert basierten A/D-Wandlung ermittelten Stromrippeln und dem oder den aus der Überabtastung ermittelten Stromrippeln vorgenommen. Dabei ist vorgesehen, dass bei nicht Übereinstimmung der detektierten Stromrippel die aus der Überabtastung ermittelten Stromrippel in die weitere Auswertung eingehen. Auf diese Weise ist die Fehlerträchtigkeit bei einer Zählung der Stromrippel in der Anlauf- und Auslaufphase des Gleichstrommotors erheblich reduziert.

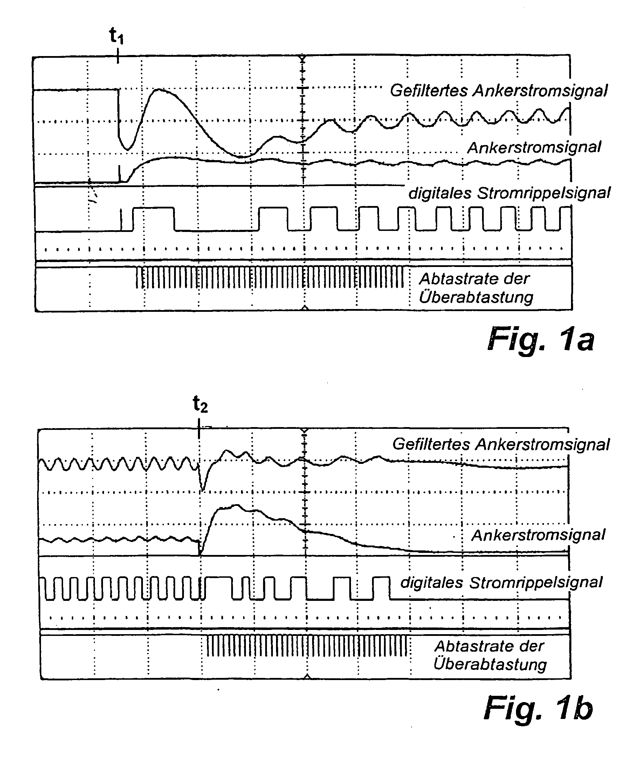

Das in **Figur 1a** gezeigte Diagramm gibt drei Signalkurven wieder und zuunterst die Abtastungsrate einer Überabtastung des zunächst gefilterten analogen Ankerstromsignals. Die mittlere Signalkurve zeigt das ungefilterte Ankerstromsignal. Eine Filterung dieses Ankerstromsignals resultiert in einer Signalkurve, die in dieser Figur mit "gefiltertes Ankerstromsignal" bezeichnet ist. Dieses gefilterte Ankerstromsignal wird einer Schwellwert basierten A/D-Wandlung unterzogen, wobei diese A/D-Wandlung in einem ASIC durchgeführt werden kann. Die auf diese Weise bereitgestellte Kurve ist als digitales "Stromrippelsignal" bezeichnet und gibt die im Ankerstromsignal, insbesondere im gefilterten Ankerstromsignal enthaltenen Stromrippel in digitaler Form wieder. Deutlich erkennbar ist in dem Stromrippelsignal, dass die Frequenz der Stromrippel über die Zeit zunimmt. Begründet ist dies dadurch, dass vor dem in Figur 1 mit t₁ bezeichneten Zeitpunkt der Gleichstrommotor unbestromt ist und erst im Zeitpunkt t₁ eingeschaltet wird. Innerhalb einer ersten Betriebsphase des Gleichstrommotors - der Anlaufphase wird das gefilterte Ankerstromsignal digital in einer vorbestimmten Taktrate abgetastet und somit bezogen auf die zuvor beschriebene A/D-Wandlung überabgetastet. Die Abtastrate dieser Überabtastung ist durch die unterste, in Figur 1a wiedergegebene Kurve gezeigt. Ebenfalls ergibt sich aus dieser Kurve die Zeitdauer, in der diese Überabtastung durchgeführt wird.

**Figur 1b** zeigt dieselben Signale bei einem Abschalten des Gleichstrommotors im Zeitpunkt t₂ und die Überabtastung im Bereich der Auslaufphase.

## Patentansprüche

1. Verfahren zum Bereitstellen eines digitalen Stromrippelsignals aus dem analogen Ankerstromsignal eines bestromten Gleichstrommotors, **dadurch gekennzeichnet,**
• **dass** das analoge Ankerstromsignal nach einer Filterung einer Schwellwert basierten A/D-Wandlung unterzogen wird,
• **dass** das analoge Ankerstromsignal bei Einschalten des Gleichstrommotors während der Anlaufphase und bei seiner Abschaltung während der Auslaufphase im wesentlichen begrenzt auf diese Phasen in einer vorbestimmten Taktrate, die höher ist als die zu erwartende maximale Frequenz der Stromrippel, überabgetastet wird und
• **dass** anschließend für eine Plausibilitätsprüfung ein Vergleich zwischen dem oder den aus der Schwellwert basierten A/D-Wandlung ermittelten Stromrippeln und dem oder den aus der Überabtastung ermittelten Stromrippeln erfolgt, wobei bei nicht hinreichender Übereinstimmung der jeweils detektierten Stromrippel die aus der Überabtastung ermittelten Stromrippel in die weitere Auswertung eingehen.

2. Verfahren nach Anspruch 1, **dadurch gekennzeichnet, dass** die Taktrate der Überabtastung etwa dem 5-fachen der maximal zu erwartenden Stromrippelfrequenz entspricht.

## Claims

1. Process for supplying a digital current ripple signal from the analogue armature current signal of an energised direct-current motor, with the analogue armature current signal, following filtering, being subjected to an A/D conversion on the basis of a threshold value, **characterised in that**,
• upon switching on the direct current motor during the start-up phase and upon switching it off during the running-down phase, and basically restricted to these phases, the analogue armature current signal is over-sampled at a predetermined clock rate which is higher than the expected maximum frequency of the current ripple, and
• that subsequently, for the purpose of a plausibility check, a comparison is carried out between the current ripple or ripples ascertained from the A/D conversion based on the threshold value and the current ripple or ripples ascertained from the over-sampling, whereby in the event that the current ripples detected in each case are inadequately compliant, the current ripples ascertained from the over-sampling are entered in the further evaluation.

2. Process in accordance with Claim 1, **characterised in that** the clock speed of the over-sampling corresponds to approximately five times the expected maximum current ripple frequency.

## Revendications

1. Procédé pour l'obtention d'un signal numérique d'ondulations de courant à partir du signal analogique du courant d'induit d'un moteur à courant continu sous courant, le signal analogique du courant d'induit étant soumis, après un filtrage, à une conversion analogique/numérique, basée sur une valeur de seuil, **caractérisé** - en ce que le signal analogique de courant d'induit, lors de la connexion du moteur à courant continu, pendant la phase de démarrage, et lors d'un arrêt pendant la phase de démarrage, est suréchantillonné, de manière essentiellement limitée à ces phases, à une fréquence d'horloge prédéterminée, qui est supérieure à la fréquence maximale attendue des ondulations de courant , et
- en ce que, pour un contrôle de plausibilité, une comparaison est effectuée ensuite entre l'ondulation ou les ondulation/s de courant déterminée/s à partir de la conversion analogique / numérique, basée sur une valeur de seuil, et l'ondulation ou les ondulations de courant déterminées à partir du suréchantillonnage, les ondulations de courant déterminées à partir du suréchantillonage intervenant dans l'évaluation suivante, en cas de concordance insuffisante des ondulations de courant respectivement détectées.

2. Procédé selon la revendication 1, **caractérisé en ce que** la fréquence d'horloge du suréchantillonnage correspond approximativement au quintuple de la fréquence maximale attendue des ondulations de courant.
